# EUROPEAN PATENT APPLICATION

(11) **EP 2 378 778 A1**
(43) Date of publication of application: **19.10.2011**
(21) Application number: 09837630.4
(22) Date of filing: 18.06.2009
(51) Int. Cl.: H04N 13/00

(54) **3D LCD USING SPECTRUM METHOD AND 3D IMAGE DISPLAY APPARATUS USING THE SAME**

(30) Priority: 06.01.2009 US 142886 P
(71) Applicant: LG Electronics Inc., Seoul 150-721 (KR)
(72) Inventor: YANG, Jeong-Hyu, Seoul 137-724 (KR); KIM, Jin-Gyeong, Seoul 137-724 (KR); CHOI, Seung-Jong, Seoul 137-724 (KR)
(74) Representative: Cabinet Plasseraud
(86) International application number: PCT/KR2009/003282
(87) International publication number: WO 2010/079869

(57) **Abstract**

The present invention provides a 3D LCD using a spectrum method. The 3D LCD which forms and displays a 3D image using light sources comprises: a 1 st light source that forms an image for a left eye; a 2nd light source that forms an image for a right eye; and a control unit that is connected to the 1 st and 2nd light sources and drives the light sources in turn, wherein the RGB spectrum bands of each light source overlap to a degree that does not cause interference between the RGB spectrum bands. Preferably, the 1st and 2nd light sources include an LED. More preferably, the 1 st and 2nd light sources are installed on a light source unit for a back light unit. Selectively, the 1 st and 2nd light sources comprise at least one light source body respectively. Therefore, the invention can: produce a 3D image of which brightness and definition are more improved than a 3D LCD using a polarization method; display the 3D image at a cheaper cost than a 3D LCD using a time-sequential method; and improve user satisfaction by increasing user convenience. In addition, the invention is able to simplify the fabrication processes of the 3D LCD and reduce fabrication costs as the 3D image can be produced through the spectrum method by using little-changed conventional LCD production processes.

## Description

### BACKGROUND OF THE INVENTION

### 1. Field of the invention

The present disclosure relates to a liquid crystal display (LCD), and more particularly, to a 3D LCD for providing a stereoscopic image.

### 2. Description of the related art

In recent years, as the interest in stereoscopic image services rises, devices for providing a stereoscopic image continued to be developed. Among the methods for implementing such a stereoscopic image, there is a stereoscopic method.

The basic principle of a stereoscopic method is a scheme for inputting images disposed perpendicular to each other to a human's left and right eyes in a separate manner, and combining the images input to the left and right eyes, respectively, in the human's brain to generate a stereoscopic image. At this time, images disposed perpendicular to each other denote that one of both images does not interfere with the other.

For a specific method for eliminating interference, there are a polarization method, a time-sequential method, and a spectral method.

First, the polarization method is to separate each image using a polarizing filter. In other words, different images filtered out by polarizing filters are to be input to the left and right eye views by applying the polarizing filters perpendicular to each other to an image for the left eye and an image for the right eye, respectively. The time-sequential method is a process of alternately displaying the left and right images, and allowing active glasses worn by the user to be synchronized with the alternately displayed images to separate each image. In other words, when images are alternately displayed, a shutter of the active glasses synchronized therewith is opened only at an eye view to which the relevant image should be input and closed at the other eye view, and as a result the left and right images are entered in a separately manner.

On the other hand, the spectral method is a process of projecting the left and right images through spectral filters having a spectral band in which the RGB spectrums are not overlapped with each other. For such projected left and right images, the left and right images are separately entered by allowing the user to wear passive glasses mounted with spectral filters passing through only spectral regions, which are set for the left and right images, respectively.

Hereinafter, a method for providing a stereoscopic image in an liquid crystal display (LCD) in the related art will be described.

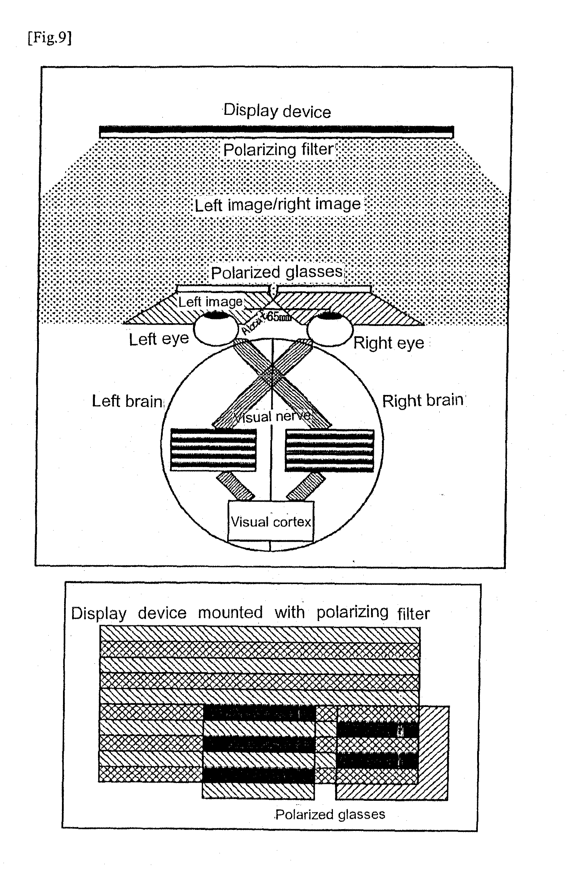

An LCD for providing a stereoscopic image in the related art mainly uses a polarization method which is implemented by polarizing filters mounted on an LCD panel, and a time-sequential method in which the left and right images are alternately displayed. First, in a 3D LCD using the polarization method, polarizing filters are mounted on an LCD panel and the left and right images have different polarized lights as illustrated in FIG. 9, thereby separating the left and right images. Then, the user wears polarized glasses to receive the separated images for the left and right eye views, respectively.

However, the polarization method has a disadvantage that the screen is dark as a whole since the light transmittance is reduced by polarizing filters. Furthermore, when the polarization method is used for a projection method, it also has a disadvantage that a special screen should be used to maintain a polarized state, thereby increasing the implementation cost. Moreover, the resolution of an image is reduced to half of that of a typical image due to separation of the left and right images through polarizing filters, thereby deteriorating the image quality.

On the other hand, in the time-sequential method used in an LCD, the display of the left and right images is synchronized with shutter glasses to separate the left and right images. In other words, while an image for the left eye and an image for the right eye are alternately displayed, the shutter glasses synchronized therewith opens only an eye view for the relevant image and closes the other eye view. In such a manner, the left and right images are separated from each other to be entered.

The foregoing method may provide a more enhanced image quality than that of the polarization method in the aspect that the resolution of an image is not insufficient. However, compared to the polarization method using passive glasses, it has a disadvantage of high cost since active glasses for synchronizing the left and right images should be used therefor. Furthermore, a device for synchronization should be mounted on the glasses and thus an overall weight of the glasses is increased, thereby reducing the user's convenience.

Comparing the problems of the polarization method and time-sequential method with the spectral method, a stereoscopic image implemented by the spectral method does not have resolution reduction causing the deterioration of an image and may be also implemented with passive glasses, thereby having an advantage of reducing the cost. However, the implementation of a stereoscopic image in the spectral method have not been used for a flat panel display such as LCD and the like.

### SUMMARY OF THE INVENTION

The present invention is contrived to solve the foregoing problems in the relate art, and an object of the present invention is to provide a 3D LCD in which a stereoscopic image is implemented on the LCD by using the spectral method, thereby enhancing the brightness and resolution of the image, compared to a 3D LCD using the polarization method.

Another object of the present invention is to provide a 3D LCD in which a stereoscopic image is implemented on the LCD by using the spectral method, thereby reducing the cost and increasing the user's use convenience compared to a 3D LCD using the time-sequential method to enhance the user's satisfaction.

Still another object of the present invention is to provide a 3D LCD in which the 3D LCD is implemented by using the spectral method that can be fabricated without changing most of the LCD fabrication process in the related art, thereby simplifying the fabrication process and reducing the production cost.

Yet still another object of the present invention is to provide a 3D LCD capable of providing a typical two-dimensional image as well as implementing a stereoscopic image using the spectral method.

In order to accomplish the foregoing objective, according to the present invention, there is provided a 3D LCD using a spectral method for forming and displaying a stereoscopic image using a light source including a first light source configured to form a left image for the left eye; a second light source configured to form a right image for the right eye; and a controller drivably connected to the first light source and the second light source, wherein the RGB spectral bands of each light source are overlapped to the extent not to be interfered with each other, and the first light source and the second light source are alternately driven under control of the controller to form a stereoscopic image.

Preferably, the first light source and the second light source may be made of a light-emitting diode (LED). More preferably, the first light source and the second light source may be provided in a light source unit of the back light unit. Alternatively, the first light source and the second light source may be made of at least one or more light source bodies, respectively.

On the other hand, according to the present invention, there is provided a 3D LCD television using a spectral method for forming and displaying a stereoscopic image using a light source, and the 3D LCD television may include a signal receiving unit configured to receive broadcasting signals; a demultiplexing unit configured to demultiplex the received broadcasting signals; a decoder configured to decode the demultiplexed broadcasting signals to output image data including a left image and a right image; a control signal generating unit configured to perform synchronization control based on the image data; a switching unit configured to selectively receive the left image data or the right image data by a control signal from the control signal generating unit; a panel driving unit configured to drive an LCD panel by the left image data and the right image data outputted from the switching unit; and a light source unit configured to operate in synchronization with the switching unit by a control signal from the control signal generating unit, wherein the light source unit comprises a first light source for forming a left image for the left eye and a second light source for forming a right image for the right eye, and the RGB spectral bands of the first light source and the second light source are overlapped to the extent not to be interfered with each other, and the first light source and the second light source are synchronized with the switching unit to be alternately driven by a control signal of the control signal generating unit.

In a 3D LCD according to the present invention, it may be possible to implement a stereoscopic image in which the brightness and resolution thereof are enhanced compared to a 3D LCD using the polarization method.

Furthermore, in a 3D LCD according to the present invention, it may be possible to implement a stereoscopic image with reduced cost and increased user's use convenience compared to a 3D LCD using the time-sequential method, thereby enhancing the user's satisfaction.

Furthermore, in a 3D LCD according to the present invention, it may be possible to implement a stereoscopic image using the spectral method without changing most of the LCD fabrication process in the related art, thereby simplifying the fabrication process and reducing the production cost.

Furthermore, in a 3D LCD according to the present invention, it may be possible to provide a typical two-dimensional image as well as implementing a stereoscopic image using the spectral method.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a view illustrating the RGB spectral characteristic of a left light source to form a left image in a 3D LCD according to the present invention;
FIG. 2 is a view illustrating the RGB spectral characteristic of a right light source to form a right image in a 3D LCD according to the present invention;
FIG. 3 is a view in which the spectral characteristics of a left light source and a right light source are compared with each other in a 3D LCD according to the present invention;
FIG. 4 is a view for explaining a method of generating a right image when the right light source is operated in a 3D LCD according to the present invention;
FIG. 5 is a view for explaining a method of generating a left image when the left light source is operated in a 3D LCD according to the present invention;
FIG. 6 is a view illustrating in which the RGB spectral characteristics of a spectral filter mounted on the left eye portion and right eye portion of passive glasses used together with the 3D LCD of the present invention are compared with the RGB spectral characteristics of the left light source and right light source in a combined manner;
FIG. 7 is a block diagram illustrating the configuration of a 3D LCD television employing the 3D LCD of the present invention;
FIG. 8 is a view illustrating stereoscopic image data, a clock and a switching signal generated by the control signal generating unit for synchronizing the operation of the left light source and right light source;
FIG. 9 is a view for explaining the operation of a 3D LCD using a polarization method in the related art; and

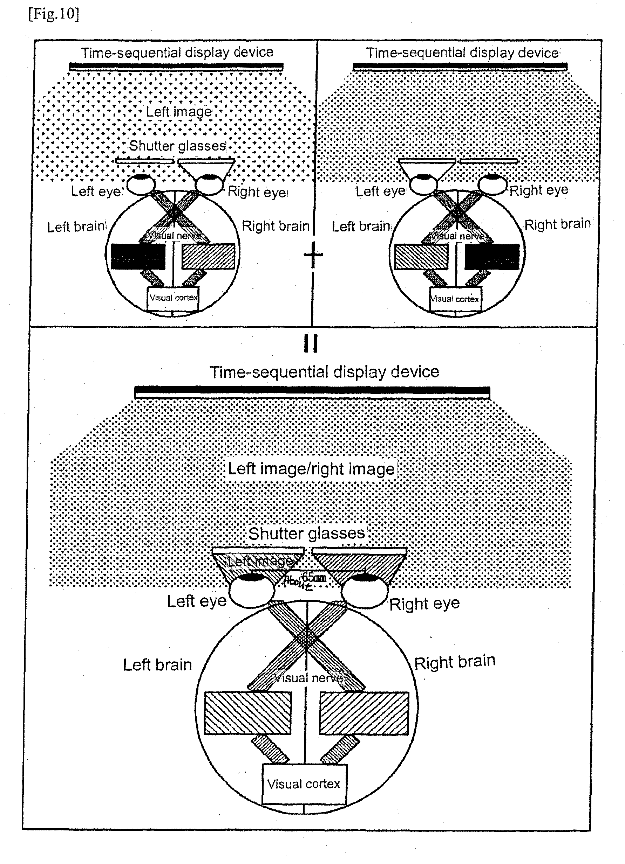

FIG. 10 is a view for explaining the operation of a 3D LCD using a time-sequential method in the related art.

### DETAILED DESCRIPTION OF THE INVENTION

The term 3-D or 3D may be used to describe a visual expression or display technology for reproducing 3-dimensional moving images having an optical illusion of depth. For an image of the left eye and an image of the right eye, the visual cortex of a viewer may analyze two images as a 3-dimensional image.

A 3-dimensional (3D) display technology employs 3D image processing and expression technologies for a device capable of displaying 3D images. Alternatively, the device capable of displaying 3D images should use a special viewing device to provide a 3-dimensional image to the viewer.

Examples of the 3D image processing and expression may include a stereoscopic image/video capture, multiview image/video capture using a multiple cameras, processing of a two-dimensional image and depth information, and the like. Examples of the device capable of 3D image display may include a liquid crystal display (LCD) provided with suitable hardware and/or software supporting 3D display technologies, a digital TV screen, a computer monitor, and the like. Examples of the special viewing device may include specialized glasses, a goggle, a head gear, eyewear, and the like.

Specifically, for the 3D image display technologies, there are anaglyph stereoscopic images (typically used together with passive anaglyph glasses), polarized stereoscopic images (typically used together with passive polarized glasses), alternate-frame sequential (typically used together with active shutter glasses/head gear), autostereoscopic display using a lenticular or barrier screen, and the like. Various spirits and features described below may be applicable to such 3D image display technologies.

A certain 3D image display technology may employ a segmented polarizer adhered to a rotating or alternately operating optical device, for example, a color filter wheel, which requires synchronization with each other. Another 3D image display technology may employ a digital light processor (DLP) based on a digital micromirror device (DMD) using rotatable microscopic mirrors disposed in a rectangular arrangement corresponding to the pixels to be displayed.

On the other hand, new types of standards associated with rendering and display technologies (particularly, 3D TV) for a stereoscopic image are being currently developed by various companies, consortiums, and organizations, and the examples thereof may include SMPTE (the Society of Motion Picture and Television Engineers), CEA (Consumer Electronics Association), 3d@Home consortium, ITU (International Telecommunication Union), and the like. In addition, other standardization groups such as DVB, BDA, ARIB, ATSC, DVD Forum, IEC, and the like participate therein. MPEG (Moving Picture Experts Group) participates in 3D image coding of multiview images, stereoscopic images, and two-dimensional images having depth information, and multiview video coding extension for MPEG-4 AVC (Advanced Video Coding) is being standardized. Stereoscopic image coding and stereoscopic distribution formatting are related to color shifting (anaglyph), pixel sub-sampling (side-by-side), checkerboard, quincunx, and enhanced video coding (2D+delta, 2D+metadata, and 2D having depth information). The spirits and technologies described herein may be applicable to those standards.

Furthermore, at least part of the spirits and technologies disclosed herein may be related to 3D image display technologies described in the aspect of image display environments for digital image or 3D TV. However, the detailed description does not limit various features described herein, and may be applicable to other types of display technologies and devices. For example, 3D TV technologies may be applicable to Blu-ray^{™}, console game, cable and IPTV transmission, mobile terminal contents transfer, and the like, and in this case they should be compatible to other types of TVs, set top boxes, Blu-ray devices (for example, Blu-ray^{™} Disk (BD) players), DVD players, and TV contents distributors.

Hereinafter, the present invention will be described in detail with reference to the accompanying drawings. The same reference numerals denote the same elements throughout all the drawings.

The present invention implements stereoscopic images using a spectral method in a liquid crystal display (LCD) by employing a new configuration in the light source unit used in the liquid crystal display (LCD). In other words, the light source unit of the present invention may include a left light source and a right light source for forming a left image and a right image, respectively, as a set to implement stereoscopic images. At this time, each light source may be configured to have a different RGB spectral characteristic.

First, the left light source and right light source having different RGB spectral characteristics, respectively, according to the present invention will be described in detail.

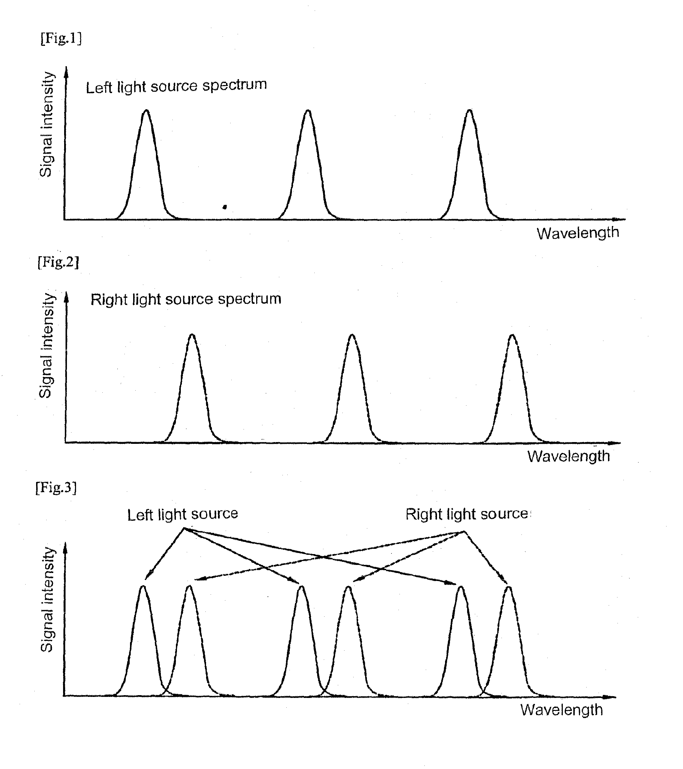

FIG. 1 is a view illustrating the RGB spectral characteristic of a left light source to form a left image, and FIG. 2 is a view illustrating the RGB spectral characteristic of a right light source to form a right image. In FIGS. 1 and 2, the horizontal axis denotes wavelength and the vertical axis denotes signal intensity.

As illustrated in FIGS. 1 and 2, a 3D LCD according to the present invention have different RGB spectral bands for the left light source and right light source.

FIG. 3 illustrates a view in which the spectral characteristics of the left light source and right light source are compared with each other in a combined manner. In FIG. 3, the horizontal axis denotes wavelength and the vertical axis denotes signal intensity.

As illustrated in FIG. 3, each light source of the 3D LCD according to the present invention may be configured to have a different RGB spectral band.

In this embodiment, each light source may be configured in such a manner that the RGB spectral bands are not overlapped with one another, but the present invention may not necessarily be limited to this. In other words, the RGB spectrums for each light source may be overlapped with one another to a certain extent. Even when the RGB spectral bands for each light source may be overlapped with one another to a certain extent, it does not matter if they are not interfered with one anther.

Here, the meaning of the RGB spectral bands for each light source being overlapped with one another to a certain extent may be defined in various ways. It may be determined by considering the resolution of 3D images required by a viewer, the features of color sense and the like, or may be defined according to the features of 3D image reproduction. For example, the RGB spectral wavelengths for each light may limit the level of being overlapped with one another using a specific percentage (%) unit, a specific wavelength unit (nanometer (nm)), or the like.

In other words, if the RGB spectral wavelengths for each light are overlapped with one another in the range of less than about 10%, then it may be defined as the level of overlap allowance. Otherwise, if the RGB spectral wavelengths for each light are overlapped with one another in the range of several nanometers, then it may be defined as the level of overlap allowance. Furthermore, it may be defined by considering the wavelengths of R (example: 625-740 nm), G (example: 520-565 nm), and B (example: 440-500 nm) constituting the RGB spectrum. In this manner, a 3D LCD may be implemented by defining the meaning of the RGB spectral bands for each light source being overlapped with one another to a certain extent in various ways.

In case of using a light source in which the RGB spectrums are overlapped with one another to a certain extent, the range of usable light sources may be widened and the cost consumed to configure the light sources may be reduced. Furthermore, the light spectrum region used by the light source may be widened, thereby obtaining an effect of enhancing the brightness of the screen.

On the other hand, according to the present invention, the left light source and right light source having the foregoing spectrum characteristics are alternately turned on/off to implement a stereoscopic image. Accordingly, when the 3D LCD of the present invention is actually operated, the RGB spectrum characteristics in FIGS. 1 and 2 may be shown in an alternate manner.

As an example of the light source having different spectrum characteristics, a light-emitting diode (LED) may be used, but the present invention will not be limited to this. Any light source may be used if it is a light source that can be configured to have different spectrum characteristics.

Furthermore, for the arrangement of light sources in the present invention, a plurality of light sources may be arranged for the left eye and the right eye in a predetermined manner. For example, the light sources may be horizontally arranged in a specific rule, and the light sources may be vertically arranged in a specific rule. Otherwise, each light source may be arranged in another rule or arrangement (for example, in a diagonal line, in an arbitrary manner, localized at the center of the screen, etc.). Furthermore, the arrangement of light sources in the present invention may use the existing methods, and for example, the light sources may be arranged according to a direct method, an edge method, and the like.

In this embodiment, stereoscopic display having two viewpoints will be described. However, the light sources of the present invention may be configured with "N" number of RGB spectral bands in a separate manner, and in this case it may be possible to constitute a stereoscopic image having N viewpoints.

According to the 3D LCD of the present invention as described above, it may be possible to implement a stereoscopic image by newly configuring the light source unit only without changing most of the LCD fabrication process. Furthermore, according to the present invention, a 3D LCD may be provided at a low cost.

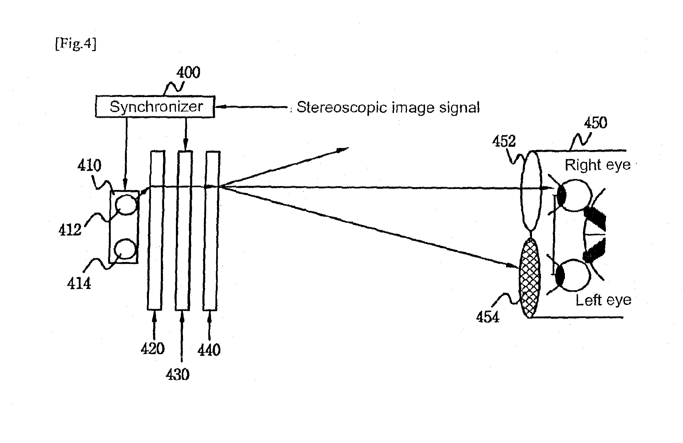

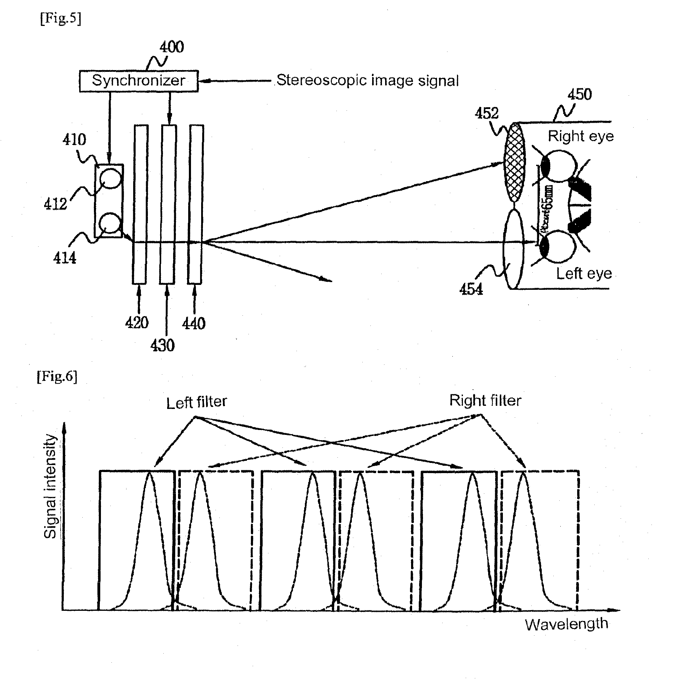

Next, referring to FIGS. 4 and 5, the operation of a 3D LCD according to the present invention will be described in detail.

FIGS. 4 and 5 are views illustrating an operation in which a 3D LCD according to the present invention alternately displays a left image and a right image, and the user receives the left image and the right image in a separate manner through passive glasses having different spectral characteristics for the left eye and the right eye. FIG. 4 is a view for explaining a method of generating a right image when the right light source is operated in a 3D LCD according to the present invention, and FIG. 5 is a view for explaining a method of generating a left image when the left light source is operated in a 3D LCD according to the present invention.

In FIGS. 4 and 5, the right eye portion of passive glasses worn by the user may be configured such that the spectral characteristics thereof correspond to the spectral characteristics of the right light source. Furthermore, the left eye portion of passive glasses worn by the user may be configured such that the spectral characteristics thereof correspond to the spectral characteristics of the left light source.

In other words, according to the present invention, spectral filters corresponding to the RGB spectrums of the left light source and the right light source, respectively, may be mounted on the left eye portion and the right eye portion of passive glasses worn by the user. The left image and the right image displayed by the 3D LCD of the present invention may be separated in an effective manner by passive glasses having the foregoing configuration. The detailed configuration of the passive glasses will be described later.

First, referring to FIG. 4, it will be described when the right light source of the 3D LCD of the present invention is operated.

In FIG. 4, if the right light source 412 of the light source unit 410 is selected by a synchronization signal of the synchronizer 400 based on a stereoscopic image signal, then the right light source 412 will emit light. Then, the emitted light passes through a diffuser 420, a liquid crystal 430 synchronized by a synchronizer 400, and a color filter 440 to form a right image.

At this time, the user receives a right image formed by the right light source 412 through a right eye portion 452 of the passive glasses 450. On the contrary, in case of a left eye portion 454, a right image is closed by the spectral characteristics of a spectral filter mounted on the left eye portion 454. Accordingly, the right image formed by the right light source 412 in such a manner is entered only to the user's right eye.

Subsequently, in FIG. 5, if it is switched to the left light source 414 by a synchronization signal of the synchronizer 400 to select the left light source 414, then the left light source 414 emits light, and the operation of the right light source 412 is suspended. The emitted light passes through a diffuser 420, a liquid crystal 430 synchronized by a synchronizer 400, and a color filter 440 to form a left image.

At this time, the user receives a left image formed by the left light source 414 through a left eye portion 454 of the passive glasses 450. On the contrary, in case of a right eye portion 452, a left image is closed by the spectral characteristics of a spectral filter mounted on the right eye portion 452. Accordingly, the left image formed by the left light source 414 in such a manner is entered only to the user's left eye.

As described above, a spectral filter mounted on the passive glasses used together with the 3D LCD of the present invention will be described in detail with reference to FIG. 6.

FIG. 6 is a view illustrating in which the RGB spectral characteristics of a spectral filter mounted on the left eye portion and right eye portion of passive glasses used together with the 3D LCD of the present invention are compared with the RGB spectral characteristics of the left light source and right light source in a combined manner.

In FIG. 6, a solid line indicates the RGB spectral characteristics of a spectral filter mounted on the left eye portion and a dotted line indicates the RGB spectral characteristics of a spectral filter mounted on the right eye portion.

As illustrated in FIG. 6, the right eye portion of passive glasses worn by the user may be configured such that the spectral characteristics thereof correspond to the spectral characteristics of the right light source. Furthermore, the left eye portion of passive glasses worn by the user may be configured such that the spectral characteristics thereof correspond to the spectral characteristics of the left light source.

A left image and a right image formed by each light source are separated through the passive glasses to which such a spectral filter is applied and entered to the user.

In this embodiment, it is configured such a manner that the RGB spectral characteristics of a spectral filter mounted on the left eye portion and right eye portion of passive glasses is identical to the RGB spectral characteristics of the left light source and the right light source provided in the 3D LCD of the present invention. However, it may not necessarily be required to have RGB spectral characteristics identical to each other. In other words, it may be sufficient that each spectral filter includes a spectral band of the corresponding light source and excludes a spectral band of the other light source.

As described above, a 3D LCD according to the present invention uses passive glasses. Accordingly, it may not be required to use high-priced active glasses, thereby reducing the cost for the implementation of a stereoscopic image. Furthermore, an apparatus for synchronizing the left image and the right image alternately displayed may not be required, and thus the weight can be reduced, thereby enhancing the use convenience.

In this embodiment, it is described that a 3D LCD according to the present invention is used together with passive glasses but it may not necessarily be required to have such a type of glasses. In other words, any device may be used if a spectral filter such as a head gear, eyewear, and the like is applied thereto and a left image and a right image formed by each light source can be separated from each other by means of this and entered to the user.

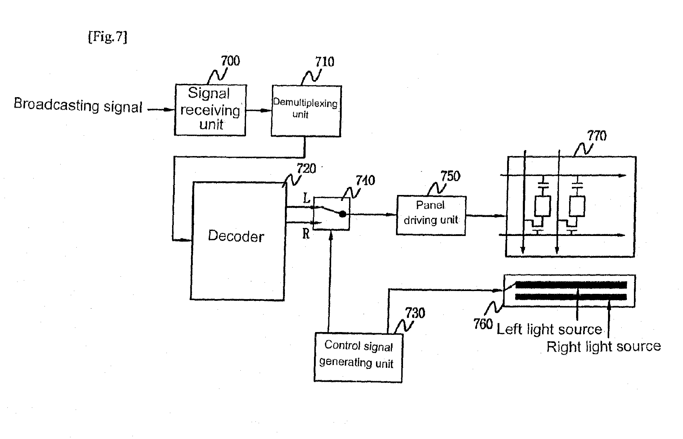

Hereinafter, the configuration and operation of a 3D LCD television employing the 3D LCD of the present invention will be described with reference to FIG. 7. FIG. 7 is a block diagram illustrating the configuration of a 3D LCD television employing the 3D LCD of the present invention.

As illustrated in FIG. 7, a 3D LCD television employing the 3D LCD of the present invention may include a signal receiving unit 700 configured to receive broadcasting signals and generate transport streams therefrom, a demultiplexing unit 710 configured to demultiplex the generated transport streams and generate elementary streams, a decoder 720 configured to decode the elementary streams and output image data, a control signal generating unit 730 configured to generate a clock and a switching signal for synchronizing the image data with the operation of the light source and synchronize the image data with the operation of the light source using them, a switching unit 740 configured to be switched to a left image data input state or a right image data input state according to the switching signal, a panel driving unit 750 configured to drive an LCD panel according to the image data outputted from the switching unit 740, a light source unit 760 configured to alternately operate the left light source and the right light source according to the clock signal, and an LCD panel 770 configured to form an image by the operation of the panel driving unit 750 and the light source unit 760.

Hereinafter, the operation of a 3D LCD television employing the 3D LCD of the present invention will be described in detail.

First, the signal receiving unit 700 receives broadcasting signals and generates transport streams therefrom. In general, image data transmitted by sky waves is formatted in the form of a transport stream in a Moving Picture Experts Group (MPEG) system. In particular, Moving Picture Experts Group (MPEG)-2 is a processing method for compressing high-quality moving images, which is widely used over various fields such as a storage medium such as a digital versatile disk (DVD), a digital TV broadcast such as satellites, cables, ground waves etc., a personal video recorder (PVR), and video transmission on a network, and the like.

The demultiplexing unit 710 performs filtering and parsing processing for filtering out packets desired to reproduce for transport streams and generates elementary streams including both video and audio information.

Then, the decoder 720 decodes elementary streams to output stereoscopic video data. In the decoder 720, decoding for audio information is carried out in a combined manner, but the description thereof will be omitted for the sake of brevity of explanation.

On the other hand, the control signal generating unit 730 generates a clock signal and a control signal to synchronize left/right image data with the operation of the light source unit 760 and transmit them to the switching unit 740 and the light source unit 760.

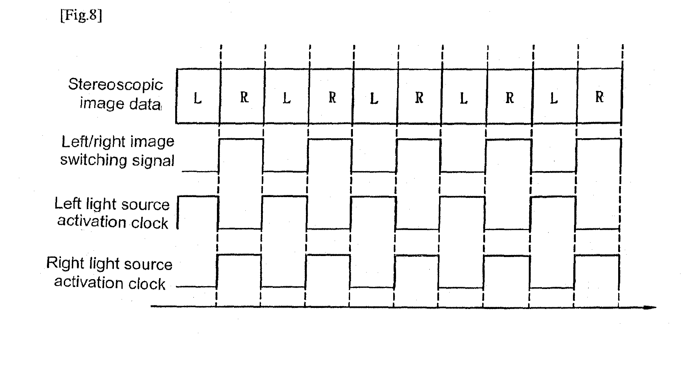

FIG. 8 is a view illustrating stereoscopic image data, a clock and a switching signal generated by the control signal generating unit 730 for synchronizing the operation of the left light source and right light source.

Then, the switching unit 740 performs a switching operation into an input state of left image data or right image data based on the switching signal from the control signal generating unit 730. On the other hand, the light source unit 760 is synchronized with the switching operation of the switching unit 740 based on a control signal of the control signal generating unit 730 to alternately operate the left light source and the right light source.

The panel driving unit 750 drives the LCD panel 770 based on the received image data and as a result an image is formed on the LCD panel 770.

Through this operation, according to a 3D LCD television employing the 3D LCD of the present invention, image data received through broadcasting signals and the operation of the light source unit are synchronized with each other to form a stereoscopic image.

On the other hand, the 3D LCD of the present invention may display a two-dimensional image in addition to implementing a stereoscopic image. In other words, in case of displaying a typical two-dimensional image, the 3D LCD of the present invention may allow either one or both of the light sources to be operated, thereby displaying a typical two-dimensional image.

In a 3D LCD according to the present invention as described above, a stereoscopic image may be implemented by using the spectral method. As a result, according to the 3D LCD of the present invention, the brightness and resolution thereof may be enhanced compared to a 3D LCD device using the polarization method, and a stereoscopic image may be implemented with reduced cost and the use convenience may be also enhanced compared to a 3D LCD device using the time-sequential method.

Furthermore, in a 3D LCD according to the present invention, a stereoscopic image may be implemented by newly configuring the light source unit without changing the LCD fabrication process in the related art, thereby simplifying the fabrication process and reducing the production cost. In particular, in case of using a light source in which the RGB spectrums are overlapped with one another to a certain extent, the range of usable light sources may be widened and the cost consumed to configure the light sources may be reduced. Furthermore, the light spectrum region used by the light source may be widened, thereby obtaining an effect of enhancing the brightness of the screen.

Various embodiments have been disclosed herein to describe an original thought associated with several aspects of the present invention. However, one or more practical features in a specific embodiment may be applicable to one or more other embodiments. Some elements or steps described in each embodiment and its associated drawings may be modified and additional elements and/or steps may be deleted, moved, or included therein.

Various features and spirits described herein may be implemented by using software, hardware, firmware, middleware, or some combination thereof. For example, computer programs (executed by a computer, a processor, a controller, etc.) stored in a computer-executable medium may include one or more program code sections for performing various operations to implement the reproduction of a stereoscopic image and a stereoscopic image reproduction device according to the present invention. Similarly, software means (executed by a computer, a processor, a controller, etc.) stored in a computer-executable medium may include part of a program code for performing various operations to implement the reproduction of a stereoscopic image and a stereoscopic image reproduction device according to the present invention.

The present invention may be applicable to various types of devices configured to form an image using a light source such as an LCD, namely, all kinds of devices using an LCD as an image display apparatus such as a personal media player (PMP), a portable phone, a computer monitor, and the like.

Various thoughts and properties described herein may be implemented in various forms within the features of the present invention, and it should be understood by those skilled in the art that the foregoing embodiments will not be limited by the forgoing detailed description, and should be broadly construed within the scope of the technical spirit defined by the appended claims unless otherwise particularly specified. All changes and modifications that fall within the scope or equivalents thereof are therefore intended to be embraced by the appended claims.

## Claims

1. A three-dimension (3D) liquid crystal display (LCD) using a spectral method for forming and displaying a stereoscopic image using a light source, the 3D LCD comprising:
a first light source configured to form a left image for the left eye;
a second light source configured to form a right image for the right eye; and
a controller drivably connected to the first light source and the second light source,
wherein the RGB spectral bands of each light source are overlapped to the extent not to be interfered with each other, and
the first light source and the second light source are alternately driven under control of the controller to form a stereoscopic image.

2. The 3D LCD of claim 1, wherein the first light source and the second light source are made of a light-emitting diode (LED).

3. The 3D LCD of claim 1, wherein the first light source and the second light source are made of at least one or more light source bodies, respectively.

4. The 3D LCD of claim 1, wherein the first light source and the second light source are provided in a light source unit of the back light unit.

5. The 3D LCD of claim 1, wherein the controller drives only either one of the first light source and the second light source to form a two-dimensional image when the formation of a two-dimensional image is needed.

6. The 3D LCD of claim 1, wherein the controller drives the first light source and the second light source at the same time to form a two-dimensional image when the formation of a two-dimensional image is needed.

7. A three-dimension (3D) liquid crystal display (LCD) television using a spectral method for forming and displaying a stereoscopic image using a light source, the 3D LCD television comprising:
a signal receiving unit configured to receive broadcasting signals;
a demultiplexing unit configured to demultiplex the received broadcasting signals;
a decoder configured to decode the demultiplexed broadcasting signals to output image data including a left image and a right image;
a control signal generating unit configured to perform synchronization control based on the image data;
a switching unit configured to selectively receive the left image data or the right image data by a control signal from the control signal generating unit;
a panel driving unit configured to drive an LCD panel by the left image data and the right image data outputted from the switching unit; and
a light source unit configured to operate in synchronization with the switching unit by a control signal from the control signal generating unit,
wherein the light source unit comprises a first light source for forming a left image for the left eye and a second light source for forming a right image for the right eye, and the RGB spectral bands of the first light source and the second light source are overlapped to the extent not to be interfered with each other, and
the first light source and the second light source are synchronized with the switching unit to be alternately driven by a control signal of the control signal
generating unit.

8. The 3D LCD television of claim 7, wherein the control signal generated by the control signal generating unit is a clock signal synchronized with the left image data and the right image data.

9. The 3D LCD television of claim 7, wherein the first light source and the second light source are made of a light-emitting diode (LED).

10. The 3D LCD television of claim 7, wherein the first light source and the second light source are made of at least one or more light source bodies, respectively.

11. The 3D LCD television of claim 7, wherein the light source unit is a back light unit.

12. A stereoscopic image reproduction system using a spectral method for forming and displaying a stereoscopic image using a light source, the system comprising:
a three-dimension (3D) liquid crystal display (LCD) comprising a first light source configured to form a left image for the left eye; a second light source configured to form a right image for the right eye; and a controller drivably connected to the first light source and the second light source, wherein the RGB spectral bands of each light source are overlapped to the extent not to be interfered with each other, and the first light source and the second light source are alternately driven under control of the controller; and
passive eyewear having a left eye portion and a right eye portion mounted with a spectral filter,
wherein the RGB spectral characteristics of the spectral filter mounted on the left eye portion and the right eye portion correspond to the RGB spectral characteristics of the first light source and the second light source, respectively.

13. The system of claim 12, wherein the RGB spectral characteristics of the spectral filter are formed to include a spectral band of the corresponding light source and exclude a spectral band of the other light source.

14. The system of claim 12, wherein the passive eyewear is passive glasses.
